# EUROPÄISCHE PATENTSCHRIFT

(11) **EP 1 783 007 B1**
(45) Veröffentlichungstag und Bekanntmachung des Hinweises auf die Patenterteilung: **23.04.2014**
(21) Anmeldenummer: 06121236.1
(22) Anmeldetag: 26.09.2006
(51) Int. Cl.: B60R 21/0134, B60R 21/00, B60R 21/013

(54) **Verfahren und Vorrichtung zur Aktivierung von Insassenschutzsystemen**
Method and device for activating occupant protection systems
Procédé et dispositif d'activation de systèmes de protection des passagers

(30) Priorität: 02.11.2005 DE 102005052250
(43) Veröffentlichungstag der Anmeldung: 09.05.2007
(73) Patentinhaber: ROBERT BOSCH GMBH, 70442 Stuttgart (DE)
(72) Erfinder: Recknagel, Rolf-Juergen, 07743 Jena (DE); Kuttenberger, Alfred, 71083 Herrenberg (DE); Steinkogler, Sascha, 79106 Freiburg (DE)

(56) Entgegenhaltungen:
- EP-A2- 1 031 475
- WO-A1-01/45985
- DE-A1- 10 234 592
- DE-A1- 10 317 637
- DE-A1- 19 944 556
- DE-A1- 19 945 411
- JP-A- 2005 313 708
- US-A1- 2001 040 065
- US-A1- 2002 105 416

## Beschreibung

### Stand der Technik

Die Erfindung geht aus von einem Verfahren zur Aktivierung von Insassenschutzsystemen nach der Gattung des unabhängigen Patentanspruchs 1 und von einer zugehörigen Vorrichtung nach der Gattung des unabhängigen Patentanspruchs 9.

Eine häufige Unfallart sind Auffahrunfälle, welche beispielsweise durch ein Stauende und/oder durch eine plötzliche Notbremsung verursacht werden. Häufig ist bei diesen Unfällen ein Heckaufprall mit einem anschließenden weiteren Frontaufprall verknüpft, welche insbesondere Verletzungen im Hals- und Rückenbereich (HWS) verursachen. Um diese Verletzungen zu reduzieren, existieren bereits Rückhaltemittel, wie z. B. eine crashaktive Kopfstütze, eine crashaktive Rückenlehne usw. welche bei einem Heckaufprall aktiviert werden und die Heckaufprallenergie in Form von Reibung oder Verformungsenergie abbauen. Durch die Aktivierung der crashaktiven Kopfstütze und der crashaktiven Rückenlehne wird der Insasse stark in den nachgebenden Sitz gepresst, weshalb der Abstand des Insassen vom Armaturenbrett bzw. Lenkrad bei einem nachfolgenden Frontcrash größer als bei einem reinen Frontcrash ist. Durch den nachfolgenden Frontcrash mit einem im Vorfeld des Fahrzeugs angeordneten Hindernis werden die Frontrückhaltemittel aktiviert, wie z. B. ein Fahrerairbag oder ein Beifahrerairbag, wobei die durch den Heckaufprall veränderten tatsächlichen Positionen der Insassen nicht berücksichtigt werden. Sind keine crashaktiven Kopfstützen und/oder crashaktiven Rückenlehnen vorhanden, dann wird der Insasse nach dem Heckaufprall bei einem nachfolgenden Frontaufprall durch einen Anteil der Heckaufprallenergie, welcher in einem vom Insassen und von einem Fahrzeugsitz gebildeten Feder-Massesystem gespeichert ist, mit einer höheren Geschwindigkeit nach vorne geschleudert, so dass der Abstand zum Armaturenbrett bzw. Lenkrad geringer als bei einem reinen Frontcrash ist.

Um den Insassenschutz weiter zu verbessern, werden zunehmend Systeme verbaut, welche eine wahrscheinliche Kollision vor dem eigentlichen Aufprall erkennen. Diese Systeme erfassen über entsprechende Sensorsysteme beispielsweise Ultraschallsignale, Videosignale, Radarsignale usw., werten die erfassten Signale aus und bereiten in Abhängigkeit des Auswerteergebnisses das Fahrzeug und die Insassen auf eine bevorstehende Kollision vor.

In der Offenlegungsschrift DE 199 44 556 A1 werden ein Verfahren und eine Vorrichtung zur Steuerung einer Bremsanlage beschrieben. Die beschriebene Vorrichtung umfasst eine Steuereinheit, welche in wenigstens einer Betriebssituation die Bremskraft an wenigstens einem Rad unabhängig vom Fahrer erhöht. Über Erfassungsmittel wird eine Kollisionsgefahr von hinten erfasst, wobei die Steuereinheit bei einer erkannten Kollisionsgefahr von hinten die erhöhte Bremskraft absenkt oder begrenzt, um die Kollisionsgefahr von hinten zu reduzieren.

In der Offenlegungsschrift DE 103 17 637 A1 wird eine Vorrichtung zur Ansteuerung einer aktiven Kopfstütze in einem Fahrzeug beschrieben. Die beschriebene Vorrichtung wird in Abhängigkeit von einem ersten Signal eines im Fahrzeug zentral angeordneten ersten Aufprallsensors und von einem zweiten Signal eines im Heckbereich des Fahrzeugs angeordneten zweiten Aufprallsensors angesteuert.

Aus der EP 1031475 A2 ist ein Insassenschutzsystem bekannt, das eine Sensorik zur Erkennung eines bevorstehenden oder aktuellen Heckaufpralls aufweist. Weitere Sensoren bestimmen die Position eines Fahrzeuginsassen nach erfolgtem Heckaufprall in Bezug auf definierte Strukturen innerhalb der Fahrzeugkabine. Zudem sind aufblasbare Rückhaltesysteme zum Schutz des Insassen vorgesehen, welche von Steuermitteln in Abhängigkeit von der aktuellen Insassenposition aufgeblasen werden. Bei einem bevorstehenden Heckaufprall wird ein Gurtstraffer aktiviert, um Gurtlose zu beseitigen. Während des Heckaufpralls wird der Fahrzeuginsasse in die federnde Sitzlehne gedrückt und von dieser bei einem sehr starken Heckaufprall zurückgefedert. Aufgrund der Rückfederung bestimmt ein Algorithmus die Ausgangsposition und einen Bewegungsverlauf des Fahrzeuginsassen und bestimmt, ob die Wahrscheinlichkeit besteht, dass der Fahrzeuginsasse aufgrund des Heckaufpralls gegen ein Hindernis, wie Lenkrad, Instrumententafel, Windschutzscheibe usw. prallt. Ist dies der Fall, dann werden Airbags der aufblasbaren Rückhaltesysteme aktiviert, um zu verhindern, dass der Fahrzeuginsasse gegen ein Hindernis in der Fahrzeugkabine prallt.

Aus der WO 01/45985 A1 ist ein passives Sicherheitssystem in einem Kraftfahrzeug mit einer Mehrzahl von Schutzvorrichtungen bekannt, die durch zugeordnete Antriebe von einem Normalzustand in einen Crash bedingten Schutzzustand bewegbar sind. Das passive Sicherheitssystem umfasst eine Pre-Crash Sensorik, welche die Wahrscheinlichkeit eines Unfalls bestimmt, und eine Steuereinheit, welche Signale der Pre-Crash Sensorik auswertet und eine oder mehrere Schutzvorrichtungen ansteuert, um diese in einen Schutzzwischenzustand zu bringen. Erkennt die Steuereinheit durch Auswerten der Signale der Pre-Crash Sensorik, dass ein Frontaufprall, ein Seitenaufprall, ein Heckaufprall oder ein Überschlag bevorsteht, dann aktiviert die Steuereinheit die betroffenen Schutzvorrichtungen, um die Fahrzeuginsassen zu schützen. Die Schutzvorrichtungen werden über die entsprechenden Antriebe in den Schutzzustand oder einen Zwischenzustand gebracht. Die Schutzvorrichtungen werden für eine vorgegebene Zeitdauer im Schutzzustand bzw. Zwischenzustand gehalten. Erkennt die Steuereinheit innerhalb der vorgegebenen Zeitspanne keinen Crash, dann werden die Schutzvorrichtungen wieder zurück in den Normalzustand gebracht.

Aus der US 2001/0040065 A1 ist ein Verfahren zur Aktivierung von Insassenschutzsystemen in einem Fahrzeug bekannt, welches eine oder mehrere unfallrelevante Größen erfasst und/oder ermittelt und auswertet. Durch Auswerten der unfallrelevanten Größen wird ein bevorstehender Heckaufprall erkannt, wobei Komponenten mindestens eines ersten Insassenschutzsystems und/oder mindestens eines zweiten Insassenschutzsystems vor einem ersten Zeitpunkt parametrisiert und/oder eingestellt werden, und wobei das mindestens eine erste Insassenschutzsystem vor dem ersten Zeitpunkt aktiviert wird, und das mindestens eine zweite Insassenschutzsystem erst nach einem weiteren erkannten Aufprall, insbesondere nach einem Frontaufprall aktiviert wird.

### Vorteile der Erfindung

Das erfindungsgemäße Verfahren zur Aktivierung von Insassenschutzsystemen in einem Fahrzeug mit den Merkmalen des unabhängigen Patentanspruchs 1 hat demgegenüber den Vorteil, dass durch Auswerten von unfallrelevanten Größen ein bevorstehender Heckaufprall erkannt und ein Aufprallzeitpunkt des Heckaufpralls abgeschätzt wird. Komponenten von mindestens einem ersten Insassenschutzsystem und/oder von mindestens einem zweiten Insassenschutzsystem werden vor dem abgeschätzten Aufprallzeitpunkt des Heckaufpralls parametrisiert und/oder eingestellt. Das mindestens eine erste Insassenschutzsystem wird vor dem abgeschätzten Aufprallzeitpunkt aktiviert und das mindestens eine zweite Insassenschutzsystem wird erst nach einem weiteren Aufprall, insbesondere nach einem Frontaufprall und/oder einem Seitenaufprall, aktiviert. Dadurch ist es in vorteilhafter Weise möglich, die ersten Insassenschutzsysteme, welche insbesondere zur Reduzierung der Aufprallfolgen bei einem Heckaufprall eingesetzt werden, zu einem sehr frühen Zeitpunkt an den bevorstehenden Heckaufprall anzupassen bzw. zu aktivieren. So können beispielsweise reversible erste Insassenschutzsysteme aktiviert oder die Auslösung von irreversiblen ersten Insassenschutzsystemen vorbereitet werden. Da ein Heckaufprall häufig mit einem nachfolgenden Aufprall verknüpft ist, insbesondere mit einem Frontaufprall und/oder einem Seitenaufprall, können die zweiten Insassenschutzsysteme, welche insbesondere zur Reduzierung der Aufprallfolgen bei einem Frontaufprall und/oder einem Seitenaufprall eingesetzt werden, durch das erfindungsgemäße Verfahren in vorteilhafter Weise auf diese Folgeunfälle vorbereitet und eingestellt werden. Die zweiten Insassenschutzsysteme können jedoch bei einem mit hoher Wahrscheinlichkeit vorhergesagten Heckaufprall auch schon vor dem geschätzten Aufprallzeitpunkt des Heckaufpralls parametrisiert und/oder eingestellt werden. Erfindungsgemäß werden die Aktivierungszeitpunkte und/oder die Aktivierungsintensität der zweiten Insassenschutzmittel in Abhängigkeit eines erkannten Heckaufpralls und von vorhandenen durch den Heckaufprall aktivierten ersten Insassenschutzmitteln so angepasst, dass die zweiten Insassenschutzmittel früher oder später und/oder mit einer höheren oder niedrigeren Intensität als bei einem reinen Frontaufprall bzw. Seitenaufprall aktiviert werden, um den Insassenschutz für diese Folgeunfälle zu optimierten.

Die zugehörige erfindungsgemäße Vorrichtung zur Aktivierung von Insassenschutzsystemen in einem Fahrzeug mit den Merkmalen des unabhängigen Patentanspruchs 9 umfasst ein Umfeldsensorsystem, welches eine oder mehrere unfallrelevante Größen erfasst und/oder ermittelt, und eine Auswerte- und Steuereinheit, welche Informationen des Umfeldsensorsystems auswertet. Erfindungsgemäß erkennt die Auswerte- und Steuereinheit durch Auswerten der unfallrelevanten Größen einen bevorstehenden Heckaufprall und schätzt einen Aufprallzeitpunkt des Heckaufpralls ab, wobei die Auswerte- und Steuereinheit Komponenten mindestens eines ersten Insassenschutzsystems und/oder mindestens eines zweiten Insassenschutzsystems kurz vor dem geschätzten Aufprallzeitpunkt des Heckaufpralls parametrisiert und/oder einstellt und das mindestens eine erste Insassenschutzsystem kurz vor dem abgeschätzten Aufprallzeitpunkt des Heckaufpralls aktiviert, und wobei die Auswerte- und Steuereinheit das mindestens eine zweite Insassenschutzsystem erst nach einem weiteren über die Aufprallsensoreinheit erkannten Aufprall, insbesondere einem Frontaufprall und/oder einem Seitenaufprall, aktiviert.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Aktivierung von Insassenschutzsystemen in einem Fahrzeug und der im unabhängigen Patentanspruch 9 angegebenen Vorrichtung zur Aktivierung von Insassenschutzsystemen in einem Fahrzeug möglich.

Besonders vorteilhaft ist, dass das mindestens eine erste Insassenschutzsystem ein Fahrzeugsicherheitssystem und/oder einen aktiven Fahrzeugsitz mit einer crashaktiven Kopfstütze und/oder einer crashaktiven Rückenlehne und/oder einem Sitzdämpfungselement umfasst. Durch den aktiven Fahrzeugsitz wird nur ein geringer Teil der Heckaufprallenergie in einem Feder-Massesystems gespeichert, welches vom Fahrzeugsitz und dem Insassen gebildet wird, da der aktive Fahrzeugsitz die Heckaufprallenergie im Form von Reibung oder Verformungsenergie abbaut. Dadurch wird in vorteilhafter Weise keine zusätzliche Energie bei einem Folgeaufprall freigesetzt. Das Fahrzeugsicherheitssystem umfasst beispielsweise ein Bremssystem des Fahrzeugs, welches in Abhängigkeit von der Fahrzeuggeschwindigkeit zum abgeschätzten Aufprallzeitpunkt des Heckaufpralls für die Aktivierung vorbereitet und/oder aktiviert wird. Bei einem erkannten Fahrzeugstillstand wird das Bremssystem vor dem abgeschätzten Aufprallzeitpunkt des Heckaufpralls aktiviert. Dadurch wird verhindert, dass das Fahrzeug durch den Heckaufprall übermäßig nach vorne beschleunigt wird, so dass die Insassen nicht so stark gegen die Rückenlehne bzw. die Kopfstütze geschleudert werden, wodurch die Verletzungsschwere im Gegensatz zu einem ungebremsten System vermindert werden kann. Bei einer erkannten Fahrzeugbewegung wird die Aktivierung des Bremssystems vor dem abgeschätzten Aufprallzeitpunkt des Heckaufpralls vorbereitet und das Bremssystem wird erst nach dem erkannten Heckaufprall aktiviert. Zur Vorbereitung der Aktivierung des Bremssystems können beispielsweise die Bremsbeläge an die Bremsscheiben angelegt werden und/oder der Bremsdruck kann aufgebaut werden. Auch in diesem Fall wird die Verletzungsschwere der Insassen vermindert, da die Geschwindigkeit reduziert wird, mit welcher die Insassen gegen die Rückenlehne bzw. gegen die Kopfstütze geschleudert werden. Das Bremssystem kann beispielsweise nach einer erkannten Betätigung eines Gaspedals in einen Ausgangszustand zurückgesetzt werden. Zudem können die Insassen über optische, akustische und/oder haptische Ausgabemittel vor dem bevorstehenden Heckaufprall gewarnt werden.

In Ausgestaltung des erfindungsgemäßen Verfahrens werden zur Parametrisierung und/oder zur Einstellung des mindestens einen zweiten Insassenschutzsystems eine Crashschwere des Heckaufpralls und/oder eine Position und/oder eine kinetische Energie des Insassen nach dem Heckaufprall abgeschätzt. Durch das erfindungsgemäße Verfahren kann berücksichtigt werden, dass der Insasse bei einem Heckaufprall in den Fahrzeugsitz gedrückt wird und dadurch ein Feder-Massesystem gebildet wird, welches einen Teil der Heckaufprallenergie speichert und bei einem anschließenden Frontaufprall freigibt. Durch die im Feder-Massesystem gespeicherte Heckaufprallenergie ist die Geschwindigkeit des Insassen in Richtung Lenkrad bzw. Armaturenbrett bei einem Folgeaufprall höher als ohne vorherigen Heckaufprall. Eine entsprechende Abschätzung der Crashschwere des Heckaufpralls und damit der zusätzlichen kinetischen Energie des Insassen während des Folgefrontaufpralls kann beispielsweise durch eine Integration von Beschleunigungsdaten während des Heckaufpralls vorgenommen werden. Dadurch können die zweiten Insassenschutzmittel bei dem nachfolgenden Frontaufprall zu einem früheren Zeitpunkt und/oder mit einer höheren Intensität aktiviert werden.

Umfassen die ersten Insassenschutzsysteme einen aktiven Fahrzeugsitz mit einer crashaktiven Kopfstütze bzw. einer crashaktiven Rückenlehne, dann wird nur ein geringer Teil der Heckaufprallenergie in dem aus dem Insassen und dem Fahrzeugsitz gebildeten Feder-Massesystem gespeichert, da der größte Teil der Heckaufprallenergie vom aktiven Fahrzeugsitz in Form von Reibung oder Verformungsenergie abgebaut wird. Dadurch wird bei einem nachfolgenden Frontaufprall keine zusätzliche Energie frei. Zudem bewirkt die Aktivierung der ersten Insassenschutzmittel, dass die Position des Insassen bzw. der Oberkörperschwerpunkt nach hinten versetzt wird, so dass der Oberkörper des Insassen während des Folgefrontaufpralls später als ohne vorherigen Heckaufprall in Richtung Lenkrad bzw. Armaturenbrett schleudert. Dadurch können die zweiten Insassenschutzmittel bei dem nachfolgenden Frontaufprall zu einem späteren Zeitpunkt aktiviert werden, wenn ein aktiver Fahrzeugsitz vorhanden ist.

Die Position und/oder die kinetische Energie des Insassen können in vorteilhafter Weise durch Auswerten eines am Fahrzeugsitz angeordneten Kraftmesselements abgeschätzt werden, welches beispielsweise ein vom Insassen während des Heckaufpralls bezüglich einer Sitzbefestigung verursachtes Drehmoment bestimmt. Aus dem Drehmomentverlauf und der bekannten Sitzkinematik lässt sich die tatsächliche Position des Insassen bestimmen und das anschließende Vorschleudern des Insassenoberkörpers aufgrund der Entspannung des aus Insasse und Fahrzeugsitz gebildeten Feder-Massesystems abschätzen. Dieses Vorschleudern ist in dieser Heck-Frontauprallkombination stärker als das zweite Insassenschutzsystem bzw. eine entsprechende Aufprallsensoreinheit detektiert, da der Heckaufprall für das zweite Insassenschutzsystem bzw. die Aufprallsensoreinheit bereits vorbei ist, der Insasse jedoch einen Teil der Heckaufprallenergie mittels dieses Feder-Massesystems speichert, welche aufgrund der Trägheit in einer zusätzlich Erhöhung der Geschwindigkeit der Vorwärtsbewegung resultiert. Durch die Detektierung des Drehmomentes können die zusätzliche Bewegungsenergie des Insassen unabhängig von einem ersten Insassenschutzsystem bestimmt werden, d.h. unabhängig davon, ob ein erstes Insassenschutzsystem aktiviert ist oder nicht, und der Zeitpunkt und/oder die Intensität der Aktivierung der zweiten Insassenschutzmittel beeinflusst werden. Eine weitere Verbesserung des Insassenschutzes bei Folgeunfällen kann durch das am Fahrzeugsitz angebrachte Sitzdämpfungselement erzielt werden, welches bei einem Heckaufprall eine definierte Drehbewegung des Fahrzeugsitzes erlaubt, bei welcher die Energie des Heckaufpralls abgebaut wird. Das mindestens eine zweite Insassenschutzsystem umfasst beispielsweise Frontrückhaltemittel in Form eines Fahrerairbags oder eines Beifahrerairbags und/oder Seitenrückhaltemittel in Form eines Seitenairbags.

### Zeichnung

Ausführungsbeispiele der Erfindung sind in der Zeichnung dargestellt und werden in der nachfolgenden Beschreibung näher erläutert.

Es zeigen:
- Figur 1: ein schematisches Blockdiagramm eines Fahrzeugs mit den erfindungswesentlichen Komponenten,
- Figur 2: eine schematische Darstellung eines aktiven Fahrzeugsitzes.

### Beschreibung

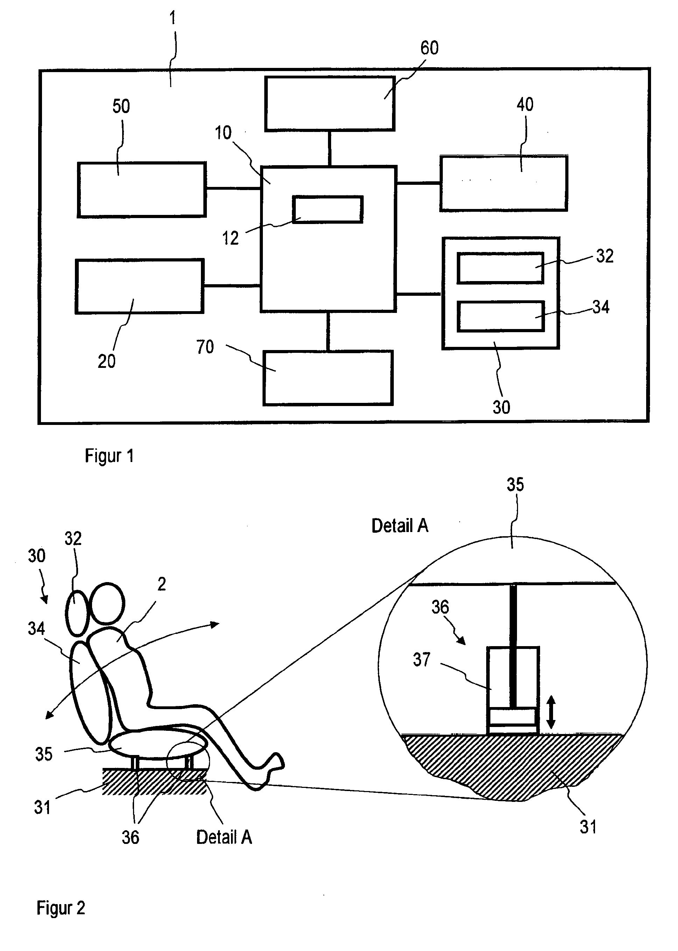

Wie aus Figur 1 ersichtlich ist, umfasst ein Fahrzeug 1 zur Durchführung des erfindungsgemäßen Verfahrens zur Aktivierung von Insassenschutzsystemen ein Umfeldsensorsystem 20, welches beispielsweise als vorausschauendes Sensorsystem ausgeführt ist, und mittels Ultraschallsignalen, Videosignale, Radarsignalen usw. eine oder mehrere unfallrelevante Größen erfasst und/oder ermittelt, und eine Auswerte- und Steuereinheit 10, welche Informationen des Umfeldsensorsystems 20 auswertet, einen bevorstehenden Heckaufprall erkennt und einen zugehörigen Aufprallzeitpunkt des Heckaufpralls abschätzt, eine Aufprallsensoreinheit 50, welche einen erfolgten Aufprall detektiert, zwei erste Insassenschutzsysteme 30, 40, welche insbesondere die durch einen Heckaufprall verursachten Aufprallfolgen abschwächen und als aktiver Fahrzeugsitz 30 und als Bremssystem 40 ausgeführt sind, und zwei zweite Insassenschutzsystems 60, 70, welche insbesondere die durch einen Frontaufprall bzw. einen Seitenaufprall verursachten Aufprallfolgen abschwächen und als Frontrückhaltemittel 60, z. B. als Fahrerairbag, Beifahrerairbag, und als Seitenrückhaltemittel 70, z. B. als Seitenairbag, ausgeführt sind. Wie weiter aus Figur 1 ersichtlich ist, umfasst der aktive Fahrzeugsitz 30 eine crashaktive Kopfstütze 32 und eine crashaktive Rückenlehne 34. Zudem kann die Auswerte- und Steuereinheit 10 die Insassen über optische, akustische und/oder haptische Ausgabemittel 12 vor dem bevorstehenden Heckaufprall warnen.

Wie aus Figur 2 ersichtlich ist, umfasst ein aktiver Fahrzeugsitz 30 neben der crashaktiven Kopfstütze 32 und der crashaktiven Rückenlehne 34, ein Sitzkissen 35 und Sitzbefestigungen 36, welche ein nicht dargestelltes Kraftmesselement zur Bestimmung eines Drehmoments umfassen, welches ein Insasse 2 während eines Heckaufpralls bezüglich der Sitzbefestigung 36 verursacht. Ein Doppelpfeil veranschaulicht die Bewegung des Sitzes 30 und des Insassen 2 bei einem Heckaufprall. Wie aus der Figur 2 weiter ersichtlich ist, siehe Darstellung des Details A, ist eine vordere Sitzbefestigung 36 als Dämpfungselement 37 ausgeführt, welche eine definierte Drehbewegung des Fahrzeugsitzes 30 mit einer idealen Dämpfung erlaubt und ein ,,Zurückschlagen" des Fahrzeugsitzes 30 nach einem Heckaufprall verhindert.

Nachfolgend wird das erfindungsgemäße Verfahren anhand von Beispielen unter Bezugnahme auf die Figuren 1 und 2 beschrieben. Ein erstes Fahrzeug 1 nähert sich beispielsweise einer Ampel oder einem Stauende und kommt zum Stehen. Ein zweites Fahrzeug nähert sich von hinten dem ersten Fahrzeug 1 und das Umfeldsensorsystem 20 des ersten Fahrzeugs erkennt das zweite Fahrzeug und ermittelt beispielsweise einen Abstand, eine Annäherungsgeschwindigkeit, eine Differenzgeschwindigkeit usw. Die Auswerte- und Steuereinheit 10 wertet die Informationen des Umfeldsensorsystems 20 aus und berechnet, dass ein Aufprall des zweiten Fahrzeugs auf das erste Fahrzeug 1 unvermeidlich ist und schätzt den Aufprallzeitpunkt ab. Kurz vor dem abgeschätzten Aufprallzeitpunkt aktiviert die Auswerte- und Steuereinheit 10 das Bremssystem 40, wodurch verhindert wird, dass das erste Fahrzeug 1 durch den Aufprall des zweiten Fahrzeugs übermäßig nach vorne beschleunigt wird. Dadurch wird der Insasse 2 mit einer geringeren Geschwindigkeit gegen die Rückenlehne 34 bzw. die Kopfstütze 32 geschleudert, wodurch sich das Verletzungsrisiko bzw. die Verletzungsschwere im Gegensatz zu einem ungebremsten System reduziert. Das System ist so ausgelegt, dass der Fahrer im ersten Fahrzeug durch Betätigen des Gaspedals das Bremssystem 40 wieder lösen kann, d.h. in einen Ausgangszustand zurücksetzen kann.

Bewegt sich das erste Fahrzeug 1 mit einer ersten Geschwindigkeit und das zweite Fahrzeug mit einer höheren zweiten Geschwindigkeit und berechnet die Auswerte- und Steuereinheit 10 durch Auswerten der Informationen des Umfeldsensorsystems 20, dass ein Aufprall des zweiten Fahrzeugs auf das erste Fahrzeug 1 unvermeidlich ist, dann parametrisiert die Auswerte- und Steuereinheit 10 das Bremssystem 40 vor dem abgeschätzten Aufprallzeitpunkt und bereitet das Bremssystem 40 durch Anlegen der Bremsbeläge an die Bremsscheiben und durch einen Aufbau des Bremsdruck auf den bevorstehenden Bremsvorgang vor. Wird ein Aufprall durch die Aufprallsensoreinheit 50, welche z. B. mindestens einen zentralen oder ausgelagerten Beschleunigungs- oder Körperschallsensor umfasst, sicher erkannt, dann wird das Bremssystem 40 aktiviert. Auch in diesem Fall wird der Insasse 2 mit einer geringeren Geschwindigkeit gegen die Rückenlehne 34 bzw. die Kopfstütze 32 geschleudert, so dass das Verletzungsrisiko bzw. die Verletzungsschwere im Gegensatz zum ungebremsten System reduziert wird. Zusätzlich wird im dargestellten Ausführungsbeispiel in beiden beschriebenen Fällen der aktive Fahrzeugsitz 30 nach einem erkannten Heckaufprall unabhängig von der Fahrzeugbewegung vor dem geschätzten Aufprallzeitpunkt sowohl bei einem erkannten Fahrzeugstillstand als auch und bei einer erkannten Fahrzeugbewegung aktiviert.

Bei einer alternativen nicht dargestellten erfindungsgemäßen Ausführungsform können die ersten Insassenschutzsysteme weitere reversible Sicherheitssysteme umfassen, welche vor dem abgeschätzten Aufprallzeitpunkt parametrisiert und/oder eingestellt werden können. So kann beispielsweise der Sicherheitsgurt vor dem abgeschätzten Aufprallzeitpunkt schon mit einem Elektromotor angezogen werden, um die Gurtlose zu verringern oder bei einem aktiven Fahrwerk kann die Federung härter eingestellt werden, um ein Abtauchen des Fahrzeugs bei einer Kollision zu unterdrücken.

In weiterer Ausgestaltung des erfindungsgemäßen Verfahrens, parametrisiert die Auswerte- und Steuereinheit 10 durch den erkannten Heckaufprall die zweiten Insassenschutzsystem 60, 70 vor dem abgeschätzten Heckaufprallzeitpunkt und/oder nach dem über die Aufprallsensoreinheit 50 erkannten Heckaufprall. Zur Parametrisierung und/oder Einstellung der zweiten Insassenschutzsystems 60, 70 schätzt die Auswerte- und Steuereinheit 10 eine Crashschwere des Heckaufpralls und/oder eine Position und/oder eine kinetische Energie des Insassen 2 nach dem Heckaufprall ab. Die zweiten Insassenschutzsysteme 60, 70 werden erst nach einem weiteren über die Aufprallsensoreinheit 50 erkannten Aufprall aktiviert. Die Frontrückhaltemittel 60 werden von der Auswerte-und Steuereinheit beispielsweise bei einem nachfolgenden Frontaufprall aktiviert und die Seitenrückhaltemittel 70 werden von der Auswerte- und Steuereinheit nach einem Seitenaufprall aktiviert. Die Auswerte- und Steuereinheit 10 berücksichtigt bei der Aktivierung der zweiten Insassenschutzsysteme 60, 70, dass der Insasse 2 bei einem Heckaufprall in den Fahrzeugsitz 30 gedrückt wird und dadurch ein Feder-Massesystem gebildet wird, welches einen Teil der Heckaufprallenergie speichert und bei einem anschließenden Frontaufprall freigibt, wodurch der Insasse 2 mit einer höheren Geschwindigkeit in Richtung Lenkrad bzw. Armaturenbrett als ohne vorherigen Heckaufprall geschleudert wird. Eine entsprechende Abschätzung der Crashschwere des Heckaufpralls und damit der zusätzlichen kinetischen Energie des Insassen 2 während des Folgefrontaufpralls kann beispielsweise durch eine Integration von Beschleunigungsdaten während des Heckaufpralls vorgenommen werden. Im dargestellten Ausführungsbeispiel bestimmt beispielsweise das an der Sitzbefestigung 36 angeordnete Kraftmesselement ein vom Insassen 2 während des Heckaufpralls bezüglich der Sitzbefestigung 36 verursachtes Drehmoment. Aus dem Drehmomentverlauf und der bekannten Sitzkinematik bestimmt die Auswerte- und Steuereinheit 10 die tatsächliche Position des Insassen 2 und schätzt das anschließende Vorschleudern des Oberkörpers des Insassen 2 aufgrund der Entspannung des aus dem Insassen 2 und dem Fahrzeugsitz 30 gebildeten Feder-Massesystems ab. Durch die Detektion des Drehmomentes können die zusätzliche Bewegungsenergie des Insassen 2 bestimmt werden und der Zeitpunkt und/oder die Intensität der Aktivierung der zweiten Insassenschutzmittel 60, 70 beeinflusst werden. Im beschriebenen Ausführungsbeispiel werden die Frontrückhaltemittel 60 von der Auswerte- und Steuereinheit 10 bei dem nachfolgenden Frontaufprall zu einem früheren Zeitpunkt und/oder mit einer höheren Intensität als bei einem reinen Frontaufprall ohne vorherigen Heckaufprall aktiviert.

Da im dargestellten Ausführungsbeispiel die ersten Insassenschutzsysteme einen aktiven Fahrzeugsitz 30 mit einer crashaktiven Kopfstütze 32 bzw. einer crashaktiven Rückenlehne 34 umfassen, wird nur ein geringer Teil der Heckaufprallenergie in dem aus Insasse 2 und Fahrzeugsitz 30 gebildeten Feder-Massesystem gespeichert, da der größte Teil der Heckaufprallenergie vom aktiven Fahrzeugsitz 30 in Form von Reibung oder Verformungsenergie abgebaut wird. Dadurch wird bei einem nachfolgenden Frontaufprall keine oder nur wenig zusätzliche Energie frei. Zudem bewirkt die Aktivierung des aktiven Fahrzeugsitzes, dass die Position des Insassen 2 bzw. der Oberkörperschwerpunkt nach hinten versetzt wird, so dass der Oberkörper des Insassen 2 während des Folgefrontaufpralls später als ohne vorherigen Heckaufprall in Richtung Lenkrad bzw. Armaturenbrett schleudert. Analog zur den vorherigen Ausführungen bestimmt die Auswerte- und Steuereinheit 10 aus dem Drehmomentverlauf und der bekannten Sitzkinematik die tatsächliche Position des Insassen 2 und schätzt das anschließende spätere Vorschleudern des Oberkörpers des Insassen 2 aufgrund des nachfolgenden Frontaufpralls ab. Durch das vom aktiven Fahrzeugsitz 30 bewirkte spätere Vorschleudern des Insassen 2, aktiviert die Auswerte- und Steuereinheit 10 hier die Frontrückhaltemittel 60 bei dem nachfolgenden Frontaufprall zu einem späteren Zeitpunkt.

Eine weitere Verbesserung des Insassenschutzes bei Folgeunfällen kann durch das am Fahrzeugsitz 30 angebrachte Sitzdämpfungselement 37 erzielt werden, welches bei einem Heckaufprall eine definierte Drehbewegung des Fahrzeugsitzes 30 erlaubt, bei welcher die Energie des Heckaufpralls abgebaut wird.

## Patentansprüche

1. Verfahren zur Aktivierung von Insassenschutzsystemen in einem Fahrzeug (1), bei welchem eine oder mehrere unfallrelevante Größen erfasst und/oder ermittelt und ausgewertet werden, wobei durch Auswerten der unfallrelevanten Größen ein bevorstehender Heckaufprall erkannt wird, wobei Komponenten mindestens eines ersten Insassenschutzsystems (30, 40) und/oder mindestens eines zweiten Insassenschutzsystems (60, 70) vor einem ersten Zeitpunkt parametrisiert und/oder eingestellt werden, wobei das mindestens eine erste Insassenschutzsystem (30, 40) vor dem ersten Zeitpunkt aktiviert wird, und das mindestens eine zweite Insassenschutzsystem (60, 70) erst nach einem weiteren erkannten Aufprall, insbesondere nach einem Frontaufprall und/oder einem Seitenaufprall, aktiviert wird, **dadurch gekennzeichnet, dass** durch Auswerten der unfallrelevanten Größen ein Aufprallzeitpunkt des Heckaufpralls abgeschätzt wird, wobei der erste Zeitpunkt der abgeschätzte Aufprallzeitpunkt des Heckaufpralls ist, und wobei Aktivierungszeitpunkt und/oder Aktivierungsintensität von zweiten Insassenschutzmitteln des mindestens einen zweiten Insassenschutzsystems (60; 70) in Abhängigkeit des erkannten Heckaufpralls und von vorhandenen durch den Heckaufprall aktivierten ersten Insassenschutzmitteln des ersten Insassenschutzsystems (30, 40) angepasst werden.

2. Verfahren nach Anspruch 1, **dadurch gekennzeichnet, dass** das mindestens eine erste Insassenschutzsystem ein Fahrzeugsicherheitssystem (40) und/oder einen aktiven Fahrzeugsitz (30) mit einer crashaktiven Kopfstütze (32) und/oder einer crashaktiven Rückenlehne (34) und/oder einem Sitzdämpfungselement (37) umfasst.

3. Verfahren nach Anspruch 2, **dadurch gekennzeichnet, dass** das Fahrzeugsicherheitssystem (40) ein Bremssystem des Fahrzeugs (1) umfasst, welches in Abhängigkeit von der Fahrzeuggeschwindigkeit zum abgeschätzten Aufprallzeitpunkt des Heckaufpralls für die Aktivierung vorbereitet und/oder aktiviert wird, wobei das Bremssystem (40) bei einem erkannten Fahrzeugstillstand vor dem abgeschätzten Aufprallzeitpunkt des Heckaufpralls aktiviert wird und bei einer erkannten Fahrzeugbewegung vor dem abgeschätzten Aufprallzeitpunkt des Heckaufpralls auf die Aktivierung vorbereitet und erst nach dem erkannten Heckaufprall aktiviert wird.

4. Verfahren nach Anspruch 3, **dadurch gekennzeichnet, dass** das Bremssystem (40) nach einer erkannten Betätigung eines Gaspedals in einen Ausgangszustand zurückgesetzt wird.

5. Verfahren nach einem der Ansprüche 1 bis 4, **dadurch gekennzeichnet, dass** ein Insasse (2) vor dem bevorstehenden Heckaufprall über optische, akustische und/oder haptische Ausgabemittel (12) gewarnt wird.

6. Verfahren nach einem der Ansprüche 1 bis 5, **dadurch gekennzeichnet, dass** zur Parametrisierung und/oder Einstellung des mindestens einen zweiten Insassenschutzsystems (60, 70) eine Crashschwere des Heckaufpralls und/oder eine Position und/oder eine kinetische Energie des Insassen (2) nach dem Heckaufprall abgeschätzt werden.

7. Verfahren nach Anspruch 6, **dadurch gekennzeichnet, dass** die Position und/oder die kinetische Energie des Insassen (2) durch Auswerten von Informationen abgeschätzt werden, welche von einem am Fahrzeugsitz (30) angeordneten Kraftmesselement zur Verfügung gestellt werden.

8. Verfahren nach einem der Ansprüche 1 bis 7, **dadurch gekennzeichnet, dass** das mindestens eine zweite Insassenschutzsystem Frontrückhaltemittel (60) und/oder Seitenrückhaltemittel (70) umfasst.

9. Vorrichtung zur Aktivierung von Insassenschutzsystemen in einem Fahrzeug, insbesondere zur Durchführung des Verfahrens nach einem der Ansprüche 1 bis 8, mit einem Umfeldsensorsystem (20), welches eine oder mehrere unfallrelevante Größen erfasst und/oder ermittelt, und einer Auswerte- und Steuereinheit (10), welche Informationen des Umfeldsensorsystems (20) auswertet, wobei die Auswerte- und Steuereinheit (10) durch Auswerten der unfallrelevanten Größen einen bevorstehenden Heckaufprall erkennt, wobei die Auswerte- und Steuereinheit (10) Komponenten mindestens eines ersten Insassenschutzsystems (30, 40) und/oder mindestens eines zweiten Insassenschutzsystems (60, 70) kurz vor einem ersten Zeitpunkt parametrisiert und/oder einstellt und das mindestens eine erste Insassenschutzsystem (30, 40) kurz vor dem ersten Zeitpunkt aktiviert, und wobei die Auswerte- und Steuereinheit (10) das mindestens eine zweite Insassenschutzsystem (60, 70) erst nach einem weiteren über die Aufprallsensoreinheit (50) erkannten Aufprall, insbesondere nach einem Frontaufprall und/oder einem Seitenaufprall, aktiviert, **dadurch gekennzeichnet, dass** die Auswerte- und Steuereinheit (10) durch Auswerten der unfallrelevanten Größen einen Aufprallzeitpunkt des bevorstehenden Heckaufpralls abschätzt, wobei der erste Zeitpunkt der abgeschätzte Aufprallzeitpunkt des Heckaufpralls ist, und wobei Aktivierungszeitpunkt und/oder Aktivierungsintensität von zweiten Insassenschutzmitteln des mindestens einen zweiten Insassenschutzsystems (60; 70) in Abhängigkeit des erkannten Heckaufpralls und von vorhandenen durch den Heckaufprall aktivierten ersten Insassenschutzmitteln des ersten Insassenschutzsystems (30, 40) angepasst sind.

10. Vorrichtung nach Anspruch 9, **dadurch gekennzeichnet, dass** das mindestens eine erste Insassenschutzsystem ein Fahrzeugsicherheitssystem (40) und/oder einen Fahrzeugsitz (30) mit einer crashaktiven Kopfstütze (32) und/oder einer crashaktiven Rückenlehne (34) und/oder einem Sitzdämpfungselement (37) umfasst und das mindestens eine zweite Insassenschutzsystem Frontrückhaltemittel (60) und/oder Seitenrückhaltemittel (70) umfasst.

## Claims

1. Method for activating occupant protection systems in a vehicle (1), in which method one or more accident-relevant variables are detected and/or determined and evaluated, wherein an imminent rear impact is identified by evaluating the accident-relevant variables, wherein components of at least one first occupant protection system (30, 40) and/or at least one second occupant protection system (60, 70) are parameterized and/or set before a first time point, wherein the at least one first occupant protection system (30, 40) is activated before the first time point, and the at least one second occupant protection system (60, 70) is activated only after a further identified impact, in particular after a front impact and/or a side impact, **characterized in that** an impact time point of the rear impact is estimated by evaluating the accident-relevant variables, wherein the first time point is the estimated impact time point of the rear impact, and wherein the activation time point and/or activation intensity of second occupant protection means of the at least one second occupant protection system (60; 70) are/is adjusted as a function of the identified rear impact and of existing first occupant protection means of the first occupant protection system (30, 40), which first occupant protection means are activated by the rear impact.

2. Method according to Claim 1, **characterized in that** the at least one first occupant protection system comprises a vehicle safety system (40) and/or an active vehicle seat (30) with a crash-active support (32) and/or a crash-active backrest (34) and/or a seat damping element (37).

3. Method according to Claim 2, **characterized in that** the vehicle safety system (40) comprises a brake system of the vehicle (1), which brake system is prepared for the activation and/or activated as a function of the vehicle speed at the estimated impact time point of the rear impact, wherein the brake system (40) is activated before the estimated impact time point of the rear impact when it is identified that the vehicle is stationary, and is prepared for activation before the estimated impact time point of the rear impact and activated only after the rear impact is identified when it is identified that the vehicle is moving.

4. Method according to Claim 3, **characterized in that** the brake system (40) is reset to a starting state after operation of an accelerator pedal is identified.

5. Method according to one of Claims 1 to 4, **characterized in that** an occupant (2) is warned by means of optical, acoustic and/or haptic output means (12) before the imminent rear impact.

6. Method according to one of Claims 1 to 5, **characterized in that** a crash severity of the rear impact and/or a position and/or a kinetic energy of the occupant (2) are/is estimated after the rear impact for the purpose of parameterizing and/or setting the at least one second occupant protection system (60, 70).

7. Method according to Claim 6, **characterized in that** the position and/or the kinetic energy of the occupant (2) are estimated by evaluating information which is provided by a force-measuring element which is arranged on the vehicle seat (30).

8. Method according to one of Claims 1 to 7, **characterized in that** the at least one second occupant protection system comprises front restraint means (60) and/or side restraint means (70).

9. Apparatus for activating occupant protection systems in a vehicle, in particular for carrying out the method according to one of Claims 1 to 8, comprising an environment sensor system (20) which detects and/or determines one or more accident-relevant variables, and an evaluation and control unit (10) which evaluates information from the environment sensor system (20), wherein the evaluation and control unit (10) identifies an imminent rear impact by evaluating the accident-relevant variables, wherein the evaluation and control unit (10) parameterizes and/or sets components of at least one first occupant protection system (30, 40) and/or at least one second occupant protection system (60, 70) shortly before a first time point and activates the at least one first occupant protection system (30, 40) shortly before the first time point, and wherein the evaluation and control unit (10) activates the at least one second occupant protection system (60, 70) only after a further impact which is identified by means of the impact sensor unit (50), in particular after a front impact and/or a side impact, **characterized in that** the evaluation and control unit (10) estimates an impact time point of the imminent rear impact by evaluating the accident-relevant variables, wherein the first time point is the estimated impact time point of the rear impact, and wherein the activation time point and/or activation intensity of second occupant protection means of the at least one second occupant protection system (60; 70) are adjusted as a function of the identified rear impact and of existing first occupant protection means of the first occupant protection system (30, 40), which first occupant protection means are activated by the rear impact.

10. Apparatus according to Claim 9, **characterized in that** the at least one first occupant protection system comprises a vehicle safety system (40) and/or a vehicle seat (30) with a crash-active head support (32) and/or a crash-active backrest (34) and/or a seat damping element (37), and the at least one second occupant protection system comprises front restraint means (60) and/or side restraint means (70).

## Revendications

1. Procédé d'activation de systèmes de protection des occupants dans un véhicule (1), selon lequel une ou plusieurs grandeurs en rapport avec un accident sont détectées et/ou déterminées et interprétées, une collision arrière imminente étant détectée par interprétation des grandeurs en rapport avec un accident, des composants d'au moins un premier système de protection des occupants (30, 40) et/ou d'au moins un deuxième système de protection des occupants (60, 70) étant paramétrés et/ou réglés avant un premier instant, l'au moins un premier système de protection des occupants (30, 40) étant activé avant le premier instant et l'au moins un deuxième système de protection des occupants (60, 70) n'étant activé qu'après une collision supplémentaire détectée, notamment après une collision frontale et/ou une collision latérale, **caractérisé en ce qu'**un instant de collision de la collision arrière est estimé par interprétation des grandeurs en rapport avec un accident, le premier instant étant l'instant de collision estimé de la collision arrière, et l'instant d'activation et/ou l'intensité d'activation de deuxièmes moyens de protection des occupants de l'au moins un deuxième système de protection des occupants (60, 70) étant adaptés en fonction de la collision arrière détectée et de premiers moyens de protection des occupants du premier système de protection des occupants (30, 40) présents, activés par la collision arrière.

2. Procédé selon la revendication 1, **caractérisé en ce que** l'au moins un premier système de protection des occupants comprend un système de sécurité du véhicule (40) et/ou un siège de véhicule actif (30) muni d'un appui-tête actif (32) et/ou d'un dossier actif (34) et/ou d'un élément amortisseur de siège (37).

3. Procédé selon la revendication 2, **caractérisé en ce que** le système de sécurité du véhicule (40) comprend un système de freinage du véhicule (1) qui est préparé pour l'activation et/ou activé en fonction de la vitesse du véhicule à l'instant de collision estimé de la collision arrière, le système de freinage (40) étant activé en présence d'une immobilisation du véhicule détectée avant l'instant de collision estimé de la collision arrière et, en cas de mouvement du véhicule détecté avant l'instant de collision estimé de la collision arrière, étant préparé à l'activation et activé seulement après la collision arrière détectée.

4. Procédé selon la revendication 3, **caractérisé en ce que** le système de freinage (40) est ramené dans un état initial après un actionnement détecté d'une pédale d'accélération.

5. Procédé selon l'une des revendications 1 à 4, **caractérisé en ce qu'**un occupant (2) est alerté par des moyens de diffusion (12) visuels, sonores et/ou tactiles avant la collision arrière imminente.

6. Procédé selon l'une des revendications 1 à 5, **caractérisé en ce que** pour paramétrer et/ou régler l'au moins un deuxième système de protection des occupants (60, 70), une gravité de la collision arrière et/ou une position et/ou une énergie cinétique de l'occupant (2) après la collision arrière sont estimées.

7. Procédé selon la revendication 6, **caractérisé en ce que** la position et/ou l'énergie cinétique de l'occupant (2) sont estimées par interprétation d'informations qui sont mises à disposition par un élément de mesure de force disposé sur le siège de véhicule (30).

8. Procédé selon l'une des revendications 1 à 7, **caractérisé en ce que** l'au moins un deuxième système de protection des occupants comprend des moyens de retenue avant (60) et/ou des moyens de retenue latéraux (70).

9. Dispositif d'activation de systèmes de protection des occupants dans un véhicule, notamment pour mettre en oeuvre le procédé selon l'une des revendications 1 à 8, comprenant un système de détection d'environnement (20) qui détecte et/ou détermine une ou plusieurs grandeurs en rapport avec un accident, et une unité d'interprétation et de commande (10) qui interprète des informations du système de détection d'environnement (20), l'unité d'interprétation et de commande (10) détectant une collision arrière imminente par interprétation des grandeurs en rapport avec un accident, l'unité d'interprétation et de commande (10) paramétrant et/ou réglant des composants d'au moins un premier système de protection des occupants (30, 40) et/ou d'au moins un deuxième système de protection des occupants (60, 70) peu de temps avant un premier instant et activant l'au moins un premier système de protection des occupants (30, 40) peu de temps avant le premier instant, et l'unité d'interprétation et de commande (10) n'activant l'au moins un deuxième système de protection des occupants (60, 70) qu'après une collision supplémentaire détectée par le biais de l'unité de détection de collision (50), notamment après une collision frontale et/ou une collision latérale, **caractérisé en ce que** l'unité d'interprétation et de commande (10), par interprétation des grandeurs en rapport avec un accident, estime un instant de collision de la collision arrière imminente, le premier instant étant l'instant de collision estimé de la collision arrière, et l'instant d'activation et/ou l'intensité d'activation de deuxièmes moyens de protection des occupants de l'au moins un deuxième système de protection des occupants (60, 70) étant adaptés en fonction de la collision arrière détectée et de premiers moyens de protection des occupants du premier système de protection des occupants (30, 40) présents, activés par la collision arrière.

10. Dispositif selon la revendication 9, **caractérisé en ce que** l'au moins un premier système de protection des occupants comprend un système de sécurité du véhicule (40) et/ou un siège de véhicule (30) muni d'un appui-tête actif (32) et/ou d'un dossier actif (34) et/ou d'un élément amortisseur de siège (37) et l'au moins un deuxième système de protection des occupants comprend des moyens de retenue avant (60) et/ou des moyens de retenue latéraux (70).
